# EUROPÄISCHE PATENTSCHRIFT

(11) **EP 3 686 046 B1**
(45) Veröffentlichungstag und Bekanntmachung des Hinweises auf die Patenterteilung: **13.10.2021**
(21) Anmeldenummer: 19215151.2
(22) Anmeldetag: 11.12.2019
(51) Int. Cl.: B60L 15/02, H02P 6/16, H02P 6/08, H02P 29/62

(54) **HEIZBETRIEB EINES ELEKTRISCHEN ANTRIEBSSYSTEMS EINES FAHRZEUGS**
HEATING OPERATION OF AN ELECTRIC DRIVE SYSTEM OF A VEHICLE
MODE CHAUFFAGE D'UN SYSTÈME D'ENTRAÎNEMENT ÉLECTRIQUE D'UN VÉHICULE

(30) Priorität: 24.01.2019 DE 102019200863
(43) Veröffentlichungstag der Anmeldung: 29.07.2020
(73) Patentinhaber: Audi AG, 85045 Ingolstadt (DE)
(72) Erfinder: Hartmann, Matthias, 85092 Kösching (DE); Dobmeier, Georg, 93049 Regensburg (DE)

(56) Entgegenhaltungen:
- EP-A1- 3 081 429
- DE-A1-102016 213 341
- FR-A1- 2 990 088

## Beschreibung

Die Erfindung betrifft ein Verfahren zum Betreiben eines Elektromotors eines Elektrofahrzeugs, bei dem eine Gebereinheit eines Elektrofahrzeugs eine Winkelposition eines Rotors eines Elektromotors des Elektrofahrzeugs relativ zu einem Stator des Elektromotors ermittelt und eine Regeleinheit des Elektrofahrzeugs zu einem feldorientierten Stromvektor, welcher eine flusserzeugende Stromkomponente und eine momenterzeugende Stromkomponente umfasst, abhängig von der ermittelten Winkelposition mehrere jeweils zu Phasen des Stators korrespondierende Phasenströme bereitstellt und die mehreren Phasen des Stators mit den bereitgestellten Phasenströmen bestromt. Ferner betrifft die Erfindung ein Antriebssystem für ein Elektrofahrzeug und ein Elektrofahrzeug.

Elektrofahrzeuge, d. h. Hybridfahrzeuge (Hybrid Electric Vehicles, HEV), Plugin-Hybridfahrzeuge (Plugin Hybrid Electric Vehicles, PHEV) und reine Elektrofahrzeuge (Battery Electric Vehicles, BEV), umfassen definitionsgemäß ein elektrisches Antriebssystem mit einem Elektromotor. Der Elektromotor ist zumeist als permanenterregte oder stromerregte Drehstrommaschine ausgebildet und umfasst einen Stator mit einer Mehrzahl von Statorwicklungen und einen in dem Stator drehbar gelagerten Rotor, welcher typabhängig eine Mehrzahl von Permanentmagneten oder eine Mehrzahl von Rotorwicklungen umfasst.

Während eines normalen Betriebs des elektrischen Antriebssystems beaufschlagt der Elektromotor den Rotor mit einem Drehmoment, welches Räder des Elektrofahrzeugs drehend antreibt. Das Antriebssystem kann ein Getriebe umfassen, welches konfiguriert ist, eine Drehgeschwindigkeit von angetriebenen Rädern abweichend von einer Drehgeschwindigkeit des Rotors einzustellen. Der normale Betrieb des elektrischen Antriebssystems wird auch Fahrbetriebsart oder Normalbetrieb genannt. DE 10 2016 213 341 A1 offenbart ein Verfahren, eine Leistung und einen Wirkungsgrad eines Elektrofahrzeugs durch eine Phasenkorrektur zu optimieren.

Infolge von parasitären ohmschen Widerständen der Statorwicklungen und ggf. der Rotorwicklungen entsteht in den stromdurchflossenen Statorwicklungen und ggf. Rotorwicklungen eine elektrische Verlustwärme, welche den Wirkungsgrad des elektrische Antriebssystems und damit eine Reichweite des Elektrofahrzeugs verringert. Die in den Wicklungen erzeugte Verlustwärme ist daher in der Fahrbetriebsart naturgemäß- ebenso wie Durchlass- oder Schaltverluste der Leistungselektronik sowie elektrische Verluste eines Zwischenkreises - unerwünscht. Allerdings können andere Betriebsarten des elektrischen Antriebssystems von der in den Wicklungen erzeugten Verlustwärme profitieren.

So offenbart die DE 10 2014 200 337 A1 ein Betriebsverfahren für ein elektrisches Antriebssystem, welches einen Elektromotor mit einer Mehrzahl von Statorwicklungen umfasst. Während des Betriebs des elektrischen Antriebssystems werden durch die Statorwicklungen fließende Phasenströme zumindest teilweise mit Biasströmen beaufschlagt, welche eine Verlustwärme in den Statorwicklungen erhöhen und keinen Beitrag zu einem von dem Elektromotor gestellten Drehmoment leisten. Bei dem Verfahren wird zunächst ein ohmscher Widerstand der Statorwicklungen und dann aus dem ermittelten ohmschen Widerstand eine Temperatur der Statorwicklungen ermittelt.

Die DE 10 2016 206 765 A1 offenbart ein weiteres elektrisches Antriebssystem für ein Fahrzeug, welches eine Heizbetriebsart aufweist. Das Antriebssystem umfasst einen Elektromotor, welcher einen Stator mit von einem elektrischen Strom durchflossenen Statorwicklungen und einen Rotor mit von einem elektrischen Strom durchflossenen Rotorwicklungen umfasst, und ein mit dem Elektromotor drehfest verbundenes Getriebe umfasst. Ferner weist das elektrische Antriebssystem einen sich durch den Rotor und das Getriebe erstreckenden Schmiermittelkreislauf auf. In einer Heizbetriebsart wird das elektrische Antriebssystem bei einem unveränderten Antriebsmoment mit einem verringerten Strom in den Statorwicklungen und einem erhöhtem Strom in den Rotorwicklungen betrieben. Infolge des erhöhten Rotorstroms entsteht in dem Rotor eine zusätzliche Verlustwärme, welche ein Schmiermittel in dem Schmiermittelkreislauf erwärmt. Auf diese Weise werden eine Lebensdauer des Getriebes und ein Wirkungsgrad des elektrischen Antriebssystems erhöht.

Übliche elektrische Antriebssysteme für Fahrzeuge umfassen neben dem Elektromotor einen Regelkreis, welcher gewöhnlich mit vektoriellen Darstellungen von elektrischen Größen, d. h. anliegenden elektrischen Spannungen oder fließenden elektrischen Strömen, beschrieben wird.

Eine erste vektorielle Darstellung wird aus entlang einer Umfangsrichtung des Elektromotors gleichverteilten Statorwicklungen gewonnen, indem den Statorwicklungen zugeordnete gleichartige elektrische Größen mittels der bekannten sogenannten Clarke-Transformation oder *α*/*β*-Transformation in ein statorfestes Bezugssystem in Form einer komplexe Zahlenebene abgebildet werden. Dabei werden üblicherweise der Ursprung der komplexen Zahlenebene in eine Drehachse des Rotors und eine positive reelle *α*-Achse des Bezugssystems kollinear zu einer bestimmten Statorwicklung des Elektromotors gewählt. Mittels der Clarke-Transformation wird eine Mehrzahl gleichartiger elektrischer Größen jeweils in eine komplexe Zahl *α* + *j* · *β,* mithin eine zweidimensionale vektorielle Darstellung (*α*,*β*) überführt, wobei der Realteil einer elektrischen Größe mit *α* und der Imaginärteil der elektrischen Größe mit *β* indiziert werden.

Eine zweite vektorielle Darstellung, die sogenannte feldorientierte Darstellung, wird aus der ersten vektoriellen Darstellung mittels der bekannten sogenannten Park-Transformation oder *d*/*q*-Transformation gewonnen. Die Park-Transformation bildet statorfeste elektrische Größen (*α, β*) mittels einer Winkelposition *φ* des Rotors relativ zu dem Stator in eine zweidimensionale vektorielle Darstellung (*d,q*) in ein rotorfestes Bezugssystem ab. Dabei stehen *d* für eine rein flusserzeugende elektrische Größe und für eine rein momenterzeugende elektrische Größe. FR 2 990 088 A1 offenbart ein Verfahren zum Bestimmen eines Versatzes der Winkelposition *φ*.

Bei einem elektrischen Antriebssystem mit einem feldorientierten Regelkreis sind die elektrischen Größen für die Statorwicklungen des Elektromotors durch flusserzeugende Vektorkomponenten, welche - abgesehen von Reluktanzmomenten - keinen Beitrag zur Momenterzeugung leisten, und momenterzeugende Vektorkomponenten, welche keinen Beitrag zur Flusserzeugung leisten, definiert.

Die DE 10 2016 212 852 A1 offenbart ein elektrisches Antriebssystem für ein Fahrzeug. Das Antriebssystem umfasst einen als Synchronmaschine ausgebildeten Elektromotor und eine feldorientierte Regeleinheit. In einer Heizbetriebsart des Antriebssystems wird der Elektromotor mittels einer Überlagerung eines schnell oszillierenden momenterzeugenden Stroms und eines zeitlich konstanten flusserzeugenden Stroms betrieben. Der momenterzeugende Strom lässt den Rotor mit relativ hoher Frequenz um eine Ruhelage pendeln, so dass ein aus der Pendelbewegung resultierendes Drehmoment insbesondere für einen Fahrer des Fahrzeugs unmerklich und im Mittel Null ist. Durch den flusserzeugenden Strom wird eine zusätzliche Verlustwärme zum Beheizen einer Fahrgastzelle des Fahrzeugs erzeugt. EP 3 081 429 A1 offenbart eine Ladebetriebsart eine Elektrofahrzeugs, welche ein Vibrieren des Motors während der Ladebetriebsart ebenfalls mittels eines schnell oszillierenden momenterzeugenden Stroms reduziert.

Allerdings können bei einem elektrischen Antriebssystem mit einer feldorientierten Regeleinheit von dem Elektromotor unerwünschte Drehmomente gestellt werden, wenn die für die Park-Transformation verwendete Winkelposition *φ* des Rotors nicht mit der tatsächlichen Winkelposition des Rotors übereinstimmt. Denn resultiert eine feldorientierte eigentlich rein flusserzeugende elektrische Größe mittels einer auf der unzutreffenden Winkelposition *φ* des Rotors beruhenden inversen Park-Transformation in einer momenterzeugenden Bestromung des Elektromotors.

Die Winkelposition *φ* wird gewöhnlich von einer Gebereinheit ermittelt und für die Regeleinheit bereitgestellt. Wenn die Gebereinheit ausfällt oder eine Fehlfunktion aufweist, stellt der Elektromotor ein unbeabsichtigtes Drehmoment, welches das Elektrofahrzeug beschleunigt.

Ein Beschleunigen des Elektrofahrzeugs geht mit einer erhöhten Unfallgefahr insbesondere dann einher, wenn das elektrische Antriebssystem während eines Stillstands des Elektrofahrzeugs vor einer Ankunft eines Fahrers des Elektrofahrzeugs unbeaufsichtigt in einer Heizbetriebsart als Standheizung für eine Fahrgastzelle des Elektrofahrzeugs betrieben wird.

Der Erfindung liegt daher die Aufgabe zugrunde, ein verbessertes Verfahren zum Betreiben eines Elektromotors eines Elektrofahrzeugs vorzuschlagen, welches eine im Stillstand des Elektrofahrzeugs sichere Heizbetriebsart aufweist. Darüber hinaus ist es Aufgabe der Erfindung, ein Antriebssystem für ein Elektrofahrzeug sowie ein Elektrofahrzeug zur Verfügung zu stellen.

Ein Gegenstand der Erfindung ist ein Verfahren zum Betreiben eines Elektromotors eines Elektrofahrzeugs, bei dem eine Gebereinheit eines Elektrofahrzeugs eine Winkelposition eines Rotors eines Elektromotors des Elektrofahrzeugs relativ zu einem Stator des Elektromotors ermittelt und eine Regeleinheit des Elektrofahrzeugs zu einem feldorientierten Stromvektor, welcher eine flusserzeugende Stromkomponente und eine momenterzeugende Stromkomponente umfasst, abhängig von der ermittelten Winkelposition mehrere jeweils zu Phasen des Stators korrespondierende Phasenströme bereitstellt und die mehreren Phasen des Stators mit den bereitgestellten Phasenströmen bestromt. Der Elektromotor, die Regeleinheit und die Gebereinheit sind Komponenten eines elektrischen Antriebssystems des Elektrofahrzeugs.

Mit dem Verfahren wird ein als eine permanenterregte oder stromerregte Drehstrommaschine ausgebildeter Elektromotor mit einer Mehrzahl von jeweils eine Phase des Elektromotors definierenden und ein oder mehrere Polpaare erzeugenden Statorwicklungen betrieben. Dabei sind die Pole eines einzigen erzeugten Polpaares in dem Stator jeweils jederzeit gegenüberliegend, d. h. in einem relativen Winkel von 180°, und die Pole mehrerer erzeugter Polpaare in der Umfangsrichtung des Stators in einer festen Reihenfolge alternierend angeordnet. Beispielsweise wechseln sich Nord- und Südpole zweier erzeugter Polpaare jeweils in relativen Winkeln von 90° derart ab, dass jederzeit jeweils die Nordpole gegenüberliegend und die Südpole gegenüberliegend angeordnet sind.

Die Regeleinheit berechnet zu einer feldorientierten vektoriellen Darstellung elektrischer Größen mittels einer Park-Transformation und einer Clarke-Transformation oder deren Inverser phasenorientierte elektrische Größen, erzeugt die berechneten elektrischen Größen und beaufschlagt den Elektromotor, genauer gesagt die Statorwicklungen des Elektromotors, mit den erzeugten elektrischen Größen.

Bei dem erfindungsgemäßen Verfahren stellt die Regeleinheit zu einem feldorientierten Heizstromvektor abhängig von einer zu einem Startzeitpunkt einmalig ermittelten Winkelposition und unabhängig von einer später ermittelten Winkelposition mehrere Phasenheizströme bereit. Ein Heizstromvektor umfasst eine flusserzeugende Stromkomponente, welche keinen Beitrag zum Erzeugen eines Antriebsmoments leistet, sondern allein einem Erzeugen von Verlustwärme in den Statorwicklungen des Elektromotors dient. Anders gesagt wird die zu Beginn, d. h. bei einem Start einer Heizbetriebsart des elektrischen Antriebssystems, einmalig ermittelte Winkelposition "eingefroren".

Wenn die ermittelte Winkelposition infolge eines Ausfalls oder einer Fehlfunktion der Gebereinheit nicht mit der tatsächlichen Winkelposition des Rotors übereinstimmt, weicht sie von der tatsächlichen Winkelposition des Rotors höchstens um 180° geteilt durch die Anzahl der Polpaare ab, beispielsweise 60° im häufigen Fall dreier Polpaare oder 36° im Fall von fünf Polpaaren. Entsprechend verschwindet ein unbeabsichtigt gestelltes Drehmoment spätestens nach einer entsprechenden Drehung des Rotors um diesen Winkel, d. h. um 60° im Fall dreier Polpaare, d. h. das Elektrofahrzeug kommt nach maximal einer solchen Rotordrehung zum Stillstand. Eine solche Rotordrehung entspricht unter Berücksichtigung einer üblichen Untersetzung des Getriebes und eines üblichen Durchmessers von angetriebenen Rädern des Elektrofahrzeugs einer Fahrtstrecke von wenigen Zentimetern. In der nach Zurücklegen der sehr kurzen Fahrtstrecke erreichten neuen Position ist das Elektrofahrzeug dank der eingefrorenen Winkelposition drehmomentfrei und folglich stabilisiert.

In einer erfindungsgemäßen Ausführungsform stellt die Regeleinheit zu dem Startzeitpunkt den feldorientierten Heizstromvektor als einen Nullvektor. Der feldorientierte Nullvektor umfasst sowohl eine verschwindende flusserzeugende Heizstromkomponente als auch eine verschwindende momenterzeugende Komponente, d. h. der Elektromotor wird beim Start der Heizbetriebsart nicht mit einem elektrischen Strom beaufschlagt.

Weiterhin erfindungsgemäß erhöht die Regeleinheit ausgehend von dem Nullvektor bis zu einem Zielzeitpunkt ausschließlich die flusserzeugende Heizstromkomponente des feldorientierten Heizstromvektors auf einen von einer Heizsteuereinrichtung vorgegebenen Sollwert größer Null. Auf diese Weise wird die Heizwirkung des elektrischen Antriebssystems zwischen dem Startzeitpunkt und dem Zielzeitpunkt ohne Momentwirkung allmählich hochgefahren. Die kürzest mögliche Zeitspanne zwischen dem Startzeitpunkt und dem Endzeitpunkt ist bekanntlich durch die Induktivitäten der Statorwicklungen bestimmt.

Vorteilhaft erhöht die Regeleinheit die flusserzeugende Heizstromkomponente zwischen dem Startzeitpunkt und dem Zielzeitpunkt linear. Eine lineare Rampe ist schaltungstechnisch einfach zu implementieren. Jedoch kann auch ein beliebiger anderer Verlauf gewählt werden, um den Sollwert zu erreichen.

In weiteren Ausführungsformen behält die Regeleinheit den Sollwert ab dem Zielzeitpunkt für eine von der Heizsteuereinheit vorgegebene Heizdauer bei. Dadurch wird sichergestellt, dass die Heizbetriebsart des elektrischen Antriebssystems eine in einer Traktionsbatterie des Elektrofahrzeugs gespeicherte elektrische Energie nicht vollständig verbraucht.

In anderen Ausführungsformen begrenzt die Regeleinheit den von der Heizsteuereinheit vorgegebenen Sollwert durch einen mittels eines thermischen Modells des Elektromotors berechneten Maximalwert. Der Maximalwert stellt sicher, dass sich der Elektromotor in der Heizbetriebsart des elektrischen Antriebssystems nicht überhitzt, wodurch ein Schadenrisiko des Elektromotors infolge der Heizbetriebsart gering ist.

In einer weiteren bevorzugten Ausführungsform überwacht die Regeleinheit die von der Gebereinheit ermittelte Winkelposition ab dem Startzeitpunkt fortlaufend und stellt den feldorientierten Heizstromvektor als einen Nullvektor und/oder wechselt in einen vorbestimmten Fehlerzustand, wenn eine Differenz zwischen einer später ermittelten Winkelposition von der zu dem Startzeitpunkt ermittelten Winkelposition einen vorbestimmten Schwellwert übersteigt. Dies bewirkt bei außergewöhnlichen Fehlfunktionen der Gebereinheit eine Notabschaltung der Heizbetriebsart des elektrischen Antriebssystems.

Gegenstand der Erfindung ist auch ein Antriebssystem für ein Elektrofahrzeug, mit einem Elektromotor, welcher einen mehrere Phasen umfassenden Stator und einen Rotor umfasst, einer Gebereinheit zum Ermitteln einer Winkelposition des Rotors relativ zu dem Stator und einer mit der Gebereinheit und den mehreren Phasen verbundenen Regeleinheit zum Bestromen der mehreren Phasen des Stators, bei dem die Regeleinheit konfiguriert ist, zu einem feldorientierten Stromvektor, welcher eine flusserzeugende Stromkomponente und eine momenterzeugende Stromkomponente umfasst, abhängig von der ermittelten Winkelposition mehrere jeweils zu Phasen des Stators korrespondierende Phasenströme bereitzustellen und die mehreren Phasen mit den bereitgestellten Phasenströmen zu bestromen. Das elektrische Antriebssystem umfasst demnach einen Elektromotor, eine einen feldorientierten Regelkreis bildende Regeleinheit und eine Gebereinheit. Ein solches Antriebssystem ist in einer Vielzahl von Elektrofahrzeugen verbaut. Entsprechend ergeben sich für das erfindungsgemäße elektrische Antriebssystem zahlreiche Verwendungsmöglichkeiten.

Bei dem erfindungsgemäßen Antriebssystem ist die Regeleinheit konfiguriert, zu einem feldorientierten Heizstromvektor abhängig von einer zu einem Startzeitpunkt einmalig ermittelten Winkelposition und unabhängig von einer später ermittelten Winkelposition mehrere Phasenheizströme bereitzustellen. Das elektrische Antriebssystem weist eine Heizbetriebsart auf, welche ein Beheizen einer Fahrgastzelle des Elektrofahrzeugs sowie weiterer Komponenten des Elektrofahrzeugs, beispielsweise der Traktionsbatterie, erlaubt. Bevorzugt ist das Antriebssystem konfiguriert, ein erfindungsgemäßes Verfahren auszuführen.

In einer weiteren Ausführungsform umfasst das Antriebssystem eine mit der Regeleinheit verbundene Heizsteuereinheit, welche konfiguriert ist, der Regeleinheit einen Sollwert für eine flusserzeugende Heizstromkomponente des Heizstromvektors zu stellen. Die Heizsteuereinheit bestimmt ferner den Startzeitpunkt und einen Zielzeitpunkt sowie eine Heizdauer der Heizbetriebsart.

In vorteilhaften Ausführungsformen umfasst der Stator des Elektromotors drei oder mindestens drei Phasen. Dreiphasige Drehstrommaschinen sind als Elektromotoren von Elektrofahrzeugen weit verbreitet. Die Phasen werden gewöhnlich mit U, V, W bezeichnet. In alternativen Ausführungsformen umfasst der Stator des Elektromotors eine von drei abweichende Anzahl von Phasenwicklungen, z.B. sechs Phasenwicklungen.

Ein weiterer Gegenstand der Erfindung ist ein Elektrofahrzeug mit einem erfindungsgemäßen Antriebssystem. Das Elektrofahrzeug weist eine sichere Standheizung auf, welche auf dem elektrischen Antriebssystem beruht und keine darüber hinausgehenden Komponenten erfordert.

Ein wesentlicher Vorteil des erfindungsgemäßen Verfahrens zum Betreiben eines Elektromotors eines Elektrofahrzeugs besteht darin, dass die Heizbetriebsart des elektrischen Antriebssystems tolerant gegenüber einem Ausfall oder eine Fehlfunktion der Gebereinheit ausgestaltet ist. Infolgedessen ist eine Unfallgefahr des Elektrofahrzeugs aufgrund der Heizbetriebsart höchstens vernachlässigbar erhöht. Zudem erfordert das Betriebsverfahren zum Ausführen der Heizbetriebsart keine zusätzlichen Komponenten.

Die Erfindung ist anhand einer Ausführungsform in den Zeichnungen schematisch dargestellt und wird unter Bezugnahme auf die Zeichnungen weiter beschrieben. Es zeigt:
- Figur 1: in einer schematischen Darstellung ein Blockdiagramm eines Antriebssystems für ein Elektrofahrzeug nach einer Ausführungsform der vorliegenden Erfindung;
- Figur 2: in einem Funktionsgraph einen Zeitverlauf einer flussgebenden Stromkomponente eines feldorientierten Heizstromvektors für ein Verfahren nach einer Ausführungsform der vorliegenden Erfindung.

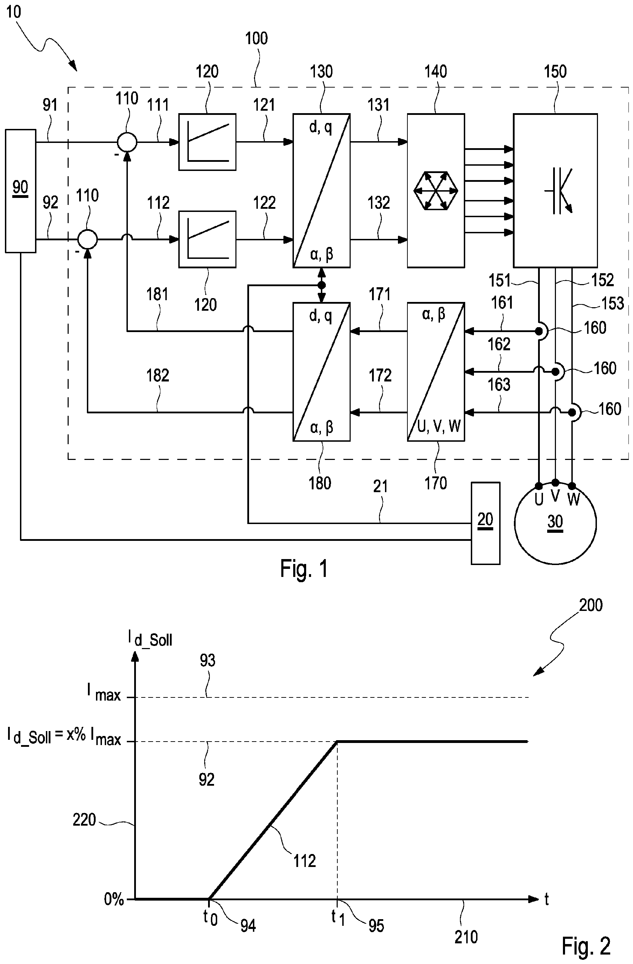

Figur 1 zeigt in einer schematischen Darstellung ein Blockdiagramm eines Antriebssystems 10 für ein Elektrofahrzeug nach einer Ausführungsform der vorliegenden Erfindung, welches bevorzugt in einem Elektrofahrzeug verbaut ist.

Das Antriebssystem 10 umfasst einen Elektromotor 30 zum Antreiben nicht dargestellter Räder des Elektrofahrzeugs. Der Elektromotor 30 umfasst einen Stator, welcher drei Phasen U, V, W in Form von Statorwicklungen umfasst, und einen in dem Stator drehbar gelagerten Rotor. Alternativ kann der Stator auch eine abweichende Anzahl von Phasen, beispielsweise sechs Phasen, umfassen.

Ferner umfasst das elektrische Antriebssystem 10 eine Gebereinheit 20 zum Ermitteln einer Winkelposition des Rotors relativ zu dem Stator, eine mit der Gebereinheit 20 und den Phasen U, V, W verbundene Regeleinheit 100 zum Bestromen der Phasen U, V, W des Stators und eine mit der Regeleinheit 100 verbundene Heizsteuereinheit 90.

Die Regeleinheit 100 umfasst zwei Vergleichsmodule 110, zwei jeweils mit einem Vergleichsmodul 110 verbundene Stromregler 120, ein mit den beiden Stromreglern 120 verbundenes inverses Park-Transformationsmodul 130, ein mit dem Park-Transformationsmodul 130 verbundenes Modulationsmodul 140, eine mit dem Modulationsmodul 140 verbundene Leistungselektronik 150, an welche die Phasen U, V, W des Elektromotors 30 angeschlossen sind, drei den Phasen U, V, W zugeordnete Strommessmodule 160, ein mit den Strommessmodulen 160 verbundenes Clarke-Transformationsmodul 170 und ein mit dem Clarke-Transformationsmodul 170 verbundenes Park-Transformationsmodul 180. Das Park-Transformationsmodul 180 ist mit den Vergleichsmodulen 110 verbunden, wodurch ein Regelkreis der Regeleinheit 100 geschlossen ist. Andere dreihphasige Ausführungsformen umfassen zwei Strommessmodule 160, da sich ein dritter Strom aufgrund der dem Fachmann bekannten Knotenregel aus zwei gemessenen Strömen berechnen lässt.

Die Gebereinheit 20 ist mit dem inversen Park-Transformationsmodul 130 und dem Park-Transformationsmodul 180 verbunden.

Die Regeleinheit 100 ist konfiguriert, zu einem feldorientierten Stromvektor, welcher eine flusserzeugende Stromkomponente 112 und eine momenterzeugende Stromkomponente 111 umfasst, abhängig von der ermittelten Winkelposition 21 mehrere jeweils zu den Phasen U, V, W des Stators korrespondierende Phasenströme 151, 152, 153 bereitzustellen und die Phasen U, V, W mit den bereitgestellten Phasenströmen 151, 152, 153 zu bestromen.

Die Heizsteuereinheit 90 ist mit der Gebereinheit 20 verbunden und konfiguriert, der Regeleinheit 100 eine zu einem Startzeitpunkt 94 einer Heizbetriebsart des elektrischen Antriebssystems 10 einmalig ermittelte Winkelposition 21 für die Park-Transformation vorzugeben. Die Heizsteuereinheit 90 ist ferner konfiguriert, der Regeleinheit 100 einen Sollwert 92 für eine flusserzeugende Heizstromkomponente 112 eines feldorientierten Heizstromvektors vorzugeben. Entsprechend ist die Regeleinheit 100 konfiguriert, zu dem feldorientierten Heizstromvektor abhängig von der von der Heizsteuereinheit 90 vorgegebenen Winkelposition 21 und unabhängig von einer später ermittelten Winkelposition 21 mehrere Phasenheizströme 151, 152, 153 bereitzustellen.

Während jedes Betriebs des elektrischen Antriebssystems 10, insbesondere in der Fahrbetriebsart, ermittelt die Gebereinheit 20 des Elektrofahrzeugs fortlaufend die Winkelposition 21 des Rotors des Elektromotors 30 relativ zu dem Stator des Elektromotors 30. Die Regeleinheit 100 stellt zu dem feldorientierten Stromvektor, welcher die flusserzeugende Stromkomponente 112 und die momenterzeugende Stromkomponente 111 umfasst, abhängig von der ermittelten Winkelposition 21 drei jeweils zu den Phasen U, V, W des Stators korrespondierende Phasenströme 151, 152, 153 bereit und bestromt die Phasen U, V, W des Stators mit den bereitgestellten Phasenströmen 151, 152, 153.

Der von der Regeleinheit 100 gebildete Regelkreis erzeugt mittels der Stromregler 120 aus den Stromkomponenten 111, 112 des feldorientierten Stromvektors einen feldorientierten Spannungsvektor mit den Spannungskomponenten 121, 122. Das inverse Park-Transformationsmodul 130 transformiert den feldorientierten Spannungsvektor in die *α*/*β-*Darstellung, welche das Modulationsmodul 140 ansteuert. Das Modulationsmodul steuert seinerseits die Leistungselektronik 150, welche an ihrem Ausgang die Phasenströme 151, 152, 153 für den Elektromotor 30 bereitstellt.

Die drei Strommessmodule 160 ermitteln einen phasenorientierten Stromvektor, dessen Komponenten von gemessenen Phasenströmen 161, 162, 163 gebildet werden. Das Clarke-Transformationsmodul 170 transformiert den phasenorientierten Stromvektor in einen Stromvektor der*α*/*β*-Darstellung mit den Stromkomponenten 171, 172. Das Clarke-Transformationsmodul 180 transformiert den *α*/*β*-Stromvektor in einen feldorientierten Stromvektor mit den Stromkomponenten 181, 182. Die Vergleichsmodule 110 erzeugen ausgehend von den Stromkomponenten 181, 182 schließlich den eingangs beschriebenen feldorientierten Stromvektor mit den Strom komponenten 111, 112.

In einer Heizbetriebsart des elektrischen Antriebssystems 10 gibt die Heizsteuereinheit 90 einen feldorientierten Heizstromvektor, einen Startzeitpunkt 94, einen Zielzeitpunkt 95 und eine Heizdauer vor und ermittelt die Gebereinheit 20 zu dem Startzeitpunkt 94 der Heizbetriebsart einmalig eine Winkelposition 21 des Rotors, welche von der Heizsteuereinheit 90 "eingefroren" und der Regeleinheit 100, insbesondere den Park-Transformationsmodulen 130, 180 der Regeleinheit 100, vorgegeben wird.

Die Regeleinheit 100 stellt zu dem vorgegebenen feldorientierten Heizstromvektor abhängig von der eingefrorenen Winkelposition 21 und unabhängig von einer später ermittelten Winkelposition 21 mehrere Phasenheizströme 151, 152, 153 bereit.

Im Einzelnen stellt die Regeleinheit 100 zu dem vorgegebenen Startzeitpunkt 94 den feldorientierten Heizstromvektor als einen Nullvektor. Dann erhöht die Regeleinheit 100 ausgehend von dem Nullvektor bis zu dem vorgegebenen Zielzeitpunkt 95 ausschließlich die flusserzeugende Heizstromkomponente 112 des feldorientierten Heizstromvektors linear auf einen Sollwert 92 größer Null des vorgegebenen feldorientierten Heizstromvektors. Beliebige alternative Zeitverläufe der flusserzeugenden Heizstromkomponente 112 sind in anderen Ausführungsformen ebenfalls möglich.

Die Regeleinheit 100 begrenzt den vorgegebenen Sollwert 92 durch einen mittels eines thermischen Modells des Elektromotors 30 berechneten Maximalwert 93. Ab dem Zielzeitpunkt 95 behält die Regeleinheit 100 den Sollwert 92 für die vorgegebene Heizdauer bei.

In der Heizbetriebsart überwacht die Regeleinheit 100 ferner die von der Gebereinheit 20 ermittelte Winkelposition 21 ab dem Startzeitpunkt 94 fortlaufend und stellt den feldorientierten Heizstromvektor als einen Nullvektor, wenn eine Differenz zwischen einer später ermittelten Winkelposition 21 und der zu dem Startzeitpunkt 94 ermittelten Winkelposition 21 einen vorbestimmten Schwellwert übersteigt oder ein anderer Fehler betreffend die Winkelposition 21 des Rotors auftritt.

Figur 2 zeigt in einem Funktionsgraph 200 einen Zeitverlauf einer flusserzeugenden Stromkomponente 112 eines feldorientierten Heizstromvektors für ein Verfahren nach einer Ausführungsform der vorliegenden Erfindung. Der Funktionsgraph 200 umfasst eine Abszisse 210, an welcher eine Zeit in Sekunden (s) abgetragen ist, und eine Ordinate 220, an welcher eine auf den Maximalwert 93 bezogene Stromstärke (%) abgetragen ist.

Der von der Regeleinheit 100 bestimmte Maximalwert 93 und der von der Heizsteuereinheit 90 vorgegebene Sollwert 92 für die flusserzeugende Stromkomponente 112 sind zeitlich konstant und entsprechend als gestrichelte Linie parallel zu der Ordinate 220 in den Funktionsgraph 200 eingezeichnet.

Ferner sind in den Funktionsgraph 200 der Startzeitpunkt 94 und der Zielzeitpunkt 95 eingetragen. Bis einschließlich zum Startzeitpunkt 94 hat die flusserzeugende Stromkomponente 112 den Wert Null. Zwischen dem Startzeitpunkt 94 und dem Zielzeitpunkt 95 erhöht sich der Wert der flusserzeugenden Stromkomponente 112 linear auf den von der Heizsteuereinheit 90 vorgegebenen Sollwert. Ab dem Zielzeitpunkt 95 hat die flusserzeugende Stromkomponente 112 für die von der Heizsteuereinheit 90 vorgegebene nicht eingezeichnete Heizdauer den vorgegebenen Sollwert.

### BEZUGSZEICHENLISTE:

- 10: System
- 20: Gebereinheit
- 21: Winkelposition *φ*
- 30: Elektromotor
- U, V, W: Phasen
- 90: Heizsteuereinheit
- 91: Sollwert *I_{q,Soll}* für momenterzeugende Stromkomponente
- 92: Sollwert *I_{d,Soll}* für flusserzeugende Stromkomponente
- 93: Maximalwert
- 94: Startzeitpunkt
- 95: Zielzeitpunkt
- 100: Regeleinheit
- 110: Vergleichsmodul
- 111: momenterzeugende Stromkomponente
- 112: flusserzeugende Stromkomponente
- 120: Stromregler
- 121: feldorientierte Spannungskomponente *u_{q}*
- 122: feldorientierte Spannungskomponente *u_{d}*
- 130: Inverses Park-Transformationsmodul
- 131: reelle Spannungskomponente *u_{α}*
- 132: imaginäre Spannungskomponente *u_{β}*
- 140: Modulationsmodul
- 150: Leistungselektronik
- 151: phasenorientierte Stromkomponente *i_{U}*
- 152: phasenorientierte Stromkomponente *i_{V}*
- 153: phasenorientierte Stromkomponente *i_{W}*
- 160: Strommessmodul
- 161: gemessene phasenorientierte Stromkomponente *i_{U}*
- 162: gemessene phasenorientierte Stromkomponente *i_{V}*
- 163: gemessene phasenorientierte Stromkomponente *i_{W}*
- 170: Clarke-Transformationsmodul
- 171: reelle Stromkomponente *i_{α}*
- 172: imaginäre Stromkomponente *i_{β}*
- 180: Park-Transformationsmodul
- 181: Istwert *I_{q,Ist}* für momenterzeugende Stromkomponente
- 182: Istwert *I_{d,Ist}* für flusserzeugende Stromkomponente
- 200: Funktionsgraph
- 210: Abszisse
- 220: Ordinate

## Patentansprüche

1. Verfahren zum Betreiben eines Elektromotors (30) eines Elektrofahrzeugs, bei dem eine Gebereinheit (20) eines Antriebssystems eines Elektrofahrzeugs eine Winkelposition (21) eines Rotors eines Elektromotors (30) des Antriebssystems relativ zu einem Stator des Elektromotors (30) ermittelt und eine Regeleinheit (100) des Antriebssystems in einer Fahrbetriebsart zu einem feldorientierten Stromvektor, welcher eine flusserzeugende Stromkomponente (112) und eine momenterzeugende Stromkomponente (111) umfasst, abhängig von der ermittelten Winkelposition (21) mehrere jeweils zu Phasen (U, V, W) des Stators korrespondierende Phasenströme (151, 152, 153) bereitstellt und die mehreren Phasen (U, V, W) des Stators mit den bereitgestellten Phasenströmen (151, 152, 153) bestromt, **dadurch gekennzeichnet, dass** die Regeleinheit (100) in einer Heizbetriebsart des Antriebssystems zu einem feldorientierten Heizstromvektor abhängig von einer zu einem Startzeitpunkt (93) der Heizbetriebsart einmalig ermittelten Winkelposition (21) und unabhängig von einer später ermittelten Winkelposition (21) mehrere Phasenheizströme (151, 152, 153) bereitstellt, wobei die Regeleinheit (100) zu dem Startzeitpunkt (94) den feldorientierten Heizstromvektor als einen Nullvektor stellt und ausgehend von dem Nullvektor bis zu einem Zielzeitpunkt (95) ausschließlich eine flusserzeugende Heizstromkomponente (112) des feldorientierten Heizstromvektors auf einen von einer Heizsteuereinrichtung (90) des Antriebssystems vorgegebenen Sollwert (92) größer Null erhöht.

2. Verfahren nach Anspruch 1, bei dem die Regeleinheit (100) die flusserzeugende Heizstromkomponente (112) zwischen dem Startzeitpunkt (94) und dem Zielzeitpunkt (95) linear erhöht.

3. Verfahren nach einem der Ansprüche 1 oder 2, bei dem die Regeleinheit (100) den Sollwert (92) ab dem Zielzeitpunkt (95) für eine von der Heizsteuereinheit (90) vorgegebene Heizdauer beibehält.

4. Verfahren nach einem der Ansprüche 1 bis 3, bei dem die Regeleinheit (100) die von der Gebereinheit (20) ermittelte Winkelposition (21) ab dem Startzeitpunkt (94) fortlaufend überwacht und den feldorientierten Heizstromvektor als einen Nullvektor stellt und/oder in einen vorbestimmten Fehlerzustand wechselt, wenn eine Differenz zwischen einer später ermittelten Winkelposition (21) von der zu dem Startzeitpunkt (94) ermittelten Winkelposition (21) einen vorbestimmten Schwellwert übersteigt.

5. Antriebssystem (10) für ein Elektrofahrzeug, mit einem Elektromotor (30), welcher einen mehrere Phasen (U, V, W) umfassenden Stator und einen Rotor umfasst, einer Gebereinheit (20) zum Ermitteln einer Winkelposition des Rotors relativ zu dem Stator und einer mit der Gebereinheit (20) und den mehreren Phasen (U, V, W) verbundenen Regeleinheit (100) zum Bestromen der mehreren Phasen (U, V, W) des Stators, bei dem die Regeleinheit (100) konfiguriert ist, in einer Fahrbetriebsart zu einem feldorientierten Stromvektor, welcher eine flusserzeugende Stromkomponente (112) und eine momenterzeugende Stromkomponente (111) umfasst, abhängig von der ermittelten Winkelposition (21) mehrere jeweils zu Phasen (U, V, W) des Stators korrespondierende Phasenströme (151, 152, 153) bereitzustellen und die mehreren Phasen (U, V, W) mit den bereitgestellten Phasenströmen (151, 152, 153) zu bestromen, **dadurch gekennzeichnet, dass** die Regeleinheit (100) konfiguriert ist, in einer Heizbetriebsart des Antriebssystems zu einem feldorientierten Heizstromvektor abhängig von einer zu einem Startzeitpunkt (93) der Heizbetriebsart einmalig ermittelten Winkelposition (21) und unabhängig von einer später ermittelten Winkelposition (21) mehrere Phasenheizströme (151, 152, 153) bereitzustellen und dabei zu dem Startzeitpunkt (94) den feldorientierten Heizstromvektor als einen Nullvektor zu stellen und ausgehend von dem Nullvektor bis zu einem Zielzeitpunkt (95) ausschließlich eine flusserzeugende Heizstromkomponente (112) des feldorientierten Heizstromvektors auf einen von einer Heizsteuereinrichtung (90) des Antriebssystems vorgegebenen Sollwert (92) größer Null zu erhöhen.

6. Antriebssystem nach Anspruch 5, mit einer mit der Regeleinheit (100) verbundenen Heizsteuereinheit (90), welche konfiguriert ist, für die Regeleinheit (100) einen Sollwert (92) für eine flusserzeugende Heizstromkomponente (112) des Heizstromvektors zu stellen.

7. Antriebssystem nach Anspruch 6, bei dem der Stator des Elektromotors (30) drei oder mindestens drei Phasen (U, V, W) umfasst.

8. Elektrofahrzeug mit einem Antriebssystem (10) nach einem der Ansprüche 5 bis 7.

## Claims

1. Method for operating an electric motor (30) of an electric vehicle, in which an encoding unit (20) of a drive system of an electric vehicle determines an angle position (21) of a rotor of an electric motor (30) of the drive system relative to a stator of the electric motor (30) and a regulating unit (100) of the drive system in a driving mode makes available to a field-oriented current vector, which comprises a flow-generating current component (112) and a moment-generating current component (111), depending on the determined angle position a plurality of phase currents (151, 152, 153) corresponding each case to phases (U, V, W) of the stator and applies the provided phase currents (151, 152, 103) to the plurality of phases (U, V, W), **characterised in that** the regulating unit (100), in a heating mode of the drive system makes available to a field-oriented heating current vector, depending on an angle position (21) determined once at a starting point in time (93) of the heating mode and independently of a later determined angle position (21) a plurality of phase heating currents (151, 152, 153), wherein the regulating unit (100) at the starting point in time (94) represents the field-oriented heating current vector as a zero vector and starting from the zero vector until a target point in time (95) increases exclusively a flow-generating heating current component (112) of the field-oriented heating current vector to a target value (92), predetermined by a heating control device (90) of the drive system, which is greater than zero.

2. Method according to claim 1, in which the regulating unit (100) increases linearly the flow-generating heating current component (112) between the starting point in time (94) and the target point in time (95).

3. Method according to any of claims 1 or 2, in which the regulating unit (100) maintains the target value (92) from the target point in time (95) for a heating duration predetermined by the heating control unit (90).

4. Method according to any of claims 1 to 3, in which the regulating unit (100) continuously monitors the angle position (21) determined by the encoding unit (20) from the starting point in time (94) and represents the field-oriented current vector as a zero vector and/or changes into a predetermined error state when a difference between a later determined angle position (21) from the angle position (21) determined at the starting point in time (94) exceeds a predetermined threshold value.

5. Drive system (10) for an electric vehicle, having an electric motor (30) which comprises a stator comprising several phases (U, V, W) and a rotor, an encoding unit (20) for determining an angle position of the rotor relative to the stator and a regulating unit (100), connected to the encoding unit (20) and the plurality of phases (U, V, W) for applying current to the plurality of phases (U, V, W) of the stator, in which the regulating unit (100) is configured in a driving mode to make available to a field-oriented current vector, which comprises a flow-generating current component (112) and a moment-generating current component (111), depending on the determined angle position (21) a plurality of phase currents (151, 152, 153) corresponding in each case to phases (U, V, W) of the stator and to apply the provided phase currents (151, 152, 153) to the plurality of phases (U, V, W), **characterised in that** the regulating unit (100) is configured in a heating mode of the drive system to make available to a field-oriented heating current vector depending on an angle position (21) determined once at a start point in time (93) of the heating mode and independently of a later determined angle position (21) a plurality of phase heating currents (151, 152, 153) and in this regard at the start point in time (94) to represent the field-oriented heating current vector as a zero vector and starting from the zero vector until a target point in time (95) to increase exclusively a flow-generating heating current component (112) of the field-oriented heating current vector to a target value (92), predetermined by a heating control device (90) of the drive system, which is greater than zero.

6. Drive system according to claim 5, having a heating control unit (90) connected to the regulating unit (100), which heating control unit is configured to represent for the regulating unit (100) a target value (92) for a flow-generating heating current component (112) of the heating current vector.

7. Drive system according to claim 6, in which the stator of the electric motor (30) comprises three or at least three phases (U, V, W).

8. Electric vehicle having a drive system (10) according to any of claims 5 to 7.

## Revendications

1. Procédé permettant de faire fonctionner un moteur électrique (30) d'un véhicule électrique, dans lequel une unité de transmission (20) d'un système d'entraînement d'un véhicule électrique détermine une position angulaire (21) d'un rotor d'un moteur électrique (30) du système d'entraînement par rapport à un stator du moteur électrique (30) et une unité de régulation (100) du système d'entraînement, dans un mode de fonctionnement de locomotion par rapport à un vecteur de courant à orientation de champ, qui comprend une composante de courant génératrice de flux (112) et une composante de courant génératrice de moment (111), fournit, en fonction de la position angulaire (21) déterminée, une pluralité de courants de phase (151, 152, 153) correspondant respectivement à des phases (U, V, W) du stator et alimente la pluralité de phases (U, V, W) du stator avec les courants de phase (151, 152, 153) fournis, **caractérisé en ce que** l'unité de régulation (100), dans un mode de fonctionnement de chauffage du système d'entraînement par rapport à un vecteur de courant de chauffage à orientation de champ, fournit une pluralité de courants de chauffage de phase (151, 152, 153) en fonction d'une position angulaire (21), déterminée de manière unique à un instant de démarrage (93) du mode de fonctionnement de chauffage, et indépendamment d'une position angulaire (21) déterminée ultérieurement, dans lequel l'unité de régulation (100) définit le vecteur de courant de chauffage à orientation de champ comme étant un vecteur nul à l'instant de démarrage (94) et augmente, à partir du vecteur nul jusqu'à un instant cible (95), exclusivement une composante de courant de chauffage génératrice de flux (112) du vecteur de courant de chauffage à orientation de champ jusqu'à une valeur de consigne (92), supérieure à zéro, prédéfinie par un appareil de commande de chauffage (90) du système d'entrainement.

2. Procédé selon la revendication 1, dans lequel l'unité de régulation (100) augmente de manière linéaire la composante de courant de chauffage génératrice de flux (112) entre l'instant de démarrage (94) et l'instant cible (95).

3. Procédé selon l'une quelconque des revendications 1 ou 2, dans lequel l'unité de régulation (100) maintient la valeur de consigne (92) à partir de l'instant cible (95) pendant une durée de chauffage prédéfinie par l'unité de commande de chauffage (90).

4. Procédé selon l'une quelconque des revendications 1 à 3, dans lequel l'unité de régulation (100) surveille en continu la position angulaire (21) déterminée par l'unité de transmission (20) à partir de l'instant de démarrage (94) et définit le vecteur de courant de chauffage à orientation de champ comme étant un vecteur nul et/ou passe à un état d'erreur prédéterminé si une différence entre une position angulaire (21) déterminée ultérieurement et la position angulaire (21) déterminée à l'instant de démarrage (94) dépasse une valeur de seuil prédéfinie.

5. Système d'entraînement (10) pour un véhicule électrique, avec un moteur électrique (30) qui comprend un stator, comprenant une pluralité de phases (U, V, W), et un rotor, une unité de transmission (20) permettant de déterminer une position angulaire du rotor par rapport au stator et une unité de régulation (100), reliée à l'unité de transmission (20) et à la pluralité de phases (U, V, W), permettant d'alimenter la pluralité de phases (U, V, W) du stator, dans lequel l'unité de régulation (100) est configurée pour, dans un mode de fonctionnement de locomotion par rapport à un vecteur de courant à orientation de champ, qui comprend une composante de courant génératrice de flux (112) et une composante de courant génératrice de moment (111), fournir, en fonction de la position angulaire (21) déterminée, une pluralité de courants de phase (151, 152, 153) correspondant respectivement à des phases (U, V, W) du stator et alimenter la pluralité de phases (U, V, W) avec les courants de phase (151, 152, 153) fournis, **caractérisé en ce que** l'unité de régulation (100), dans un mode de fonctionnement de chauffage du système d'entraînement par rapport à un vecteur de courant de chauffage à orientation de champ, est configurée pour fournir une pluralité de courants de chauffage de phase (151, 152, 153) en fonction d'une position angulaire (21), déterminée de manière unique à un instant de démarrage (93) du mode de fonctionnement de chauffage, et indépendamment d'une position angulaire (21) déterminée ultérieurement et pour définir le vecteur de courant de chauffage à orientation de champ comme étant un vecteur nul à l'instant de démarrage (94) et pour augmenter, à partir du vecteur nul jusqu'à un instant cible (95) exclusivement une composante de courant de chauffage génératrice de flux (112) du vecteur de courant de chauffage à orientation de champ jusqu'à une valeur de consigne (92), supérieure à zéro, prédéfinie par un appareil de commande de chauffage (90) du système d'entrainement.

6. Système d'entraînement selon la revendication 5, avec une unité de commande de chauffage (90) reliée à l'unité de régulation (100) et configurée pour définir, à destination de l'unité de régulation (100), une valeur de consigne (92) pour une composante de courant de chauffage génératrice de flux (112) du vecteur de courant de chauffage.

7. Système d'entraînement selon la revendication 6, dans lequel le stator du moteur électrique (30) comprend trois ou au moins trois phases (U, V, W).

8. Véhicule électrique avec un système d'entrainement (10) selon l'une quelconque des revendications 5 à 7.
